(19) Europäisches Patentamt
European Patent Office
Office européen des brevets

(11) **EP 2 739 859 B1**

(12) **EUROPÄISCHE PATENTSCHRIFT**

(45) Veröffentlichungstag und Bekanntmachung des Hinweises auf die Patenterteilung:
**29.07.2015   Patentblatt 2015/31**

(21) Anmeldenummer: **12743685.5**

(22) Anmeldetag: **04.08.2012**

(51) Int Cl.:
*F04D 25/08* (2006.01)    *F04D 27/00* (2006.01)
*F04D 27/02* (2006.01)

(86) Internationale Anmeldenummer:
**PCT/EP2012/003337**

(87) Internationale Veröffentlichungsnummer:
**WO 2013/020689 (14.02.2013 Gazette 2013/07)**

(54) **DREHZAHL-GESTEUERTER LÜFTER MIT KONTROLLE DER LEISTUNGSAUFNAHME DES ELEKTROMOTORS**

ROTATION-SPEED-CONTROLLED FAN WITH CONTROL OF THE POWER CONSUMPTION OF THE ELECTRIC MOTOR

VENTILATEUR COMMANDÉ EN VITESSE DE ROTATION AVEC CONTRÔLE DE LA CONSOMMATION D'ÉNERGIE DU MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2011   DE 102011109769**

(43) Veröffentlichungstag der Anmeldung:
**11.06.2014   Patentblatt 2014/24**

(73) Patentinhaber: **ebm-papst St. Georgen GmbH & Co. KG**
**78112 St. Georgen (DE)**

(72) Erfinder:
• **KARWATH, Arno**
  **78652 Deisslingen (DE)**
• **MAIER, Tobias**
  **78628 Rottweil (DE)**
• **SCHMID, Harald**
  **78576 Emmingen-Liptingen (DE)**
• **KIENZLER, Richard**
  **78112 St. Georgen (DE)**
• **SCHNEIDER, Stefan**
  **78087 Mönchweiler (DE)**
• **HELLER, Frank**
  **78126 Königsfeld-Burgberg (DE)**
• **MÜLLER, Martin**
  **72297 Seewald (DE)**
• **HOGG, Gerald**
  **79879 Wutach-Münchingen (DE)**

(74) Vertreter: **Raible, Tobias**
**Raible & Raible**
**Patentanwälte**
**Bolzstrasse 3**
**70173 Stuttgart (DE)**

(56) Entgegenhaltungen:
**EP-A2- 1 519 113       DE-A1-102008 057 870**
**US-A1- 2006 204 383**

EP 2 739 859 B1

**Beschreibung**

Die Erfindung betrifft einen Lüfter, dessen Lüfterkennlinie bevorzugt aber nicht notwendig einen sog. Sattel oder Drucksattel aufweist. Darunter versteht man eine Stelle der Kennlinie, an der - infolge Abreißens der Strömung an den Lüfterflügeln - die Strömung abreißt, wodurch die Leistungsaufnahme des Lüfters und infolge dessen auch der von ihm erzeugte Volumenstrom abnimmt. Dieses Phänomen tritt vor allem bei Radial-, Axial- und Diagonallüftern auf, es kann aber z.B. auch bei BLDC-Motoren in anderen Applikationen relevant sein.

Die EP 1 519 113 A2 zeigt ein Heizgerät mit einem Frischluft-Abgas-Leitsystem, einem Brenner und einem Gebläse mit einem Motor. Der Motor hat eine Drehzahlerfassung und eine Leistungserfassung. Die Gebläsedrehzahl wird gesteuert oder geregelt. Die Heizleistung des Heizgeräts wird eingestellt, indem für den Betrieb des Heizgeräts das Verhältnis Gebläsedrehzahl zu gewünschter Heizleistung entsprechend einer Kennlinie oder eines Algorithmus festgelegt wird und hieraus eine erforderliche Gebläsedrehzahl ermittelt wird. Die Kennlinie wird ermittelt aus einer Messung eines Wertepaares von Gebläsedrehzahl und Gebläseleistung mit dem individuellen Frischluft-Abgas-Leitungssystem.

Die DE 10 2008 057 870 A1 zeigt eine Lüfteranordnung mit einem Elektromotor und einem Radiallüfterrad, eine Vorrichtung zur Ermittlung der vom Motor aufgenommenen elektrischen Leistung Pist, einen Vergleicher, dem ein Wert Pist für die aufgenommene elektrische Leistung und ein Wert Psoll eines Sollwertwandlers zugeführt wird, wobei das Ausgangssignal des Vergleichers einem Regler zugeführt wird. Das Ausgangssignal des Reglers wird einem Begrenzer und anschließend einem PWM-Modul zugeführt.

Es ist deshalb eine Aufgabe der Erfindung, einen neuen Lüfter bereit zu stellen.

Diese Aufgabe wird gelöst durch den Gegenstand des Patentanspruchs 1. Auf diese Weise erhöht sich dann, wenn die Strömung an den Lüfterflügeln abzureißen droht, die Lüfterdrehzahl automatisch, so dass die Kennlinie Volumenstrom/Druck stabil bleibt. Dadurch wird bei Kennlinien mit Satteln die Bildung des Sattels verhindert oder zumindest reduziert.

Eine vorteilhafte Weiterbildung der Erfindung ist Gegenstand des Patentanspruchs 8.

Da nämlich bei Kennlinien mit Satteln im Bereich des Druck-Sattels der Anstieg der Drehzahl erheblich sein kann, z. B. von 6500 auf 7300 U/min, also um 12 Prozent, wird bei dieser Weiterbildung der Anstieg der Drehzahl auf einen Wert begrenzt, der innerhalb der zulässigen mechanischen maximalen Obergrenze des Lüfters liegt.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1    eine schematische Darstellung eines Axiallüfters, dessen Lüfterrad 18 vom Außenrotor eines Außenläufermotors angetrieben wird; hierbei ist im Stator ein NTC-Temperatursensor angeordnet, der zur Messung einer dem Motor zugeordneten Temperatur dient,

Fig. 2    ein Schaltbild für einen Lüfter gemäß Fig. 1,

Fig. 3    eine Darstellung der Lüfterkennlinie für einen Diagonalventilator nach dem Stand der Technik (gestrichelt gezeichnet) und eine Lüfterkennlinie für einen verbesserten Diagonalventilator,

Fig. 4    eine Darstellung der Drehzahl über dem Volumenstrom, wobei gestrichelt die Kennlinie für einen Diagonalventilator mit Drehzahlregelung (Stand der Technik) eingezeichnet ist, und mit einer durchgehenden Linie der Drehzahlverlauf bei dem selben Diagonalventilator in verbesserter Ausführung, also mit Mindest-Leistungsregelung,

Fig. 5    eine Darstellung des Motorstroms eines Diagonalventilators über dem Volumenstrom dV/dt, gestrichelt bei einem Diagonalventilator nach dem Stand der Technik und mit einer durchgehenden Linie in verbesserter Ausführung, also mit Leistungsregler,

Fig. 6    eine Darstellung analog Fig. 5, aber für die vom Antriebsmotor aufgenommene elektrische Leistung,

Fig. 7    einen schematischen Überblick über das in dem μC aus Fig. 2 ablaufende Programm,

Fig. 8    die Programmschritte einer erfindungsgemäßen Regelroutine aus dem Programm aus Fig. 7,

Fig. 9    die Programmschritte eines Leistungsreglers aus Fig. 8,

Fig. 10    einen erfindungsgemäßen Regler, bei dem die Leistungsregelung vor der Drehzahlregelung erfolgt,

Fig. 11    einen erfindungsgemäßen Regler, bei dem die Drehzahlregelung vor der Leistungsregelung erfolgt,

Fig. 12    Programmschritte für einen temperaturabhängigen Sollwert P_s(T_i) für die Leistungsregelung, und

Fig 13    ein Druckerhöhungs-Volumenstrom-Diagramm mit Temperaturbegrenzung.

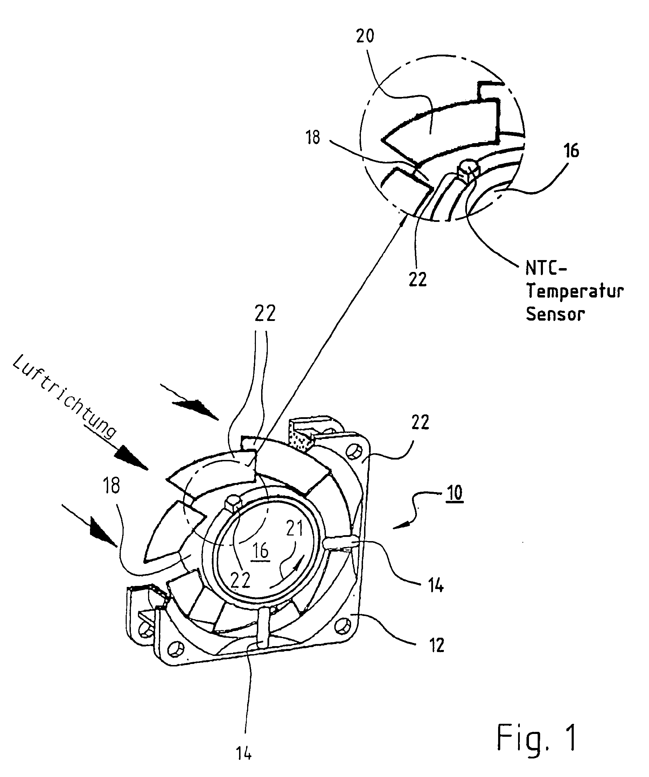

Fig. 1 zeigt beispielhaft einen Axialventilator 10 nach dem Stand der Technik. Dieser hat ein Lüftergehäuse 12, das aufgeschnitten dargestellt ist. Innerhalb des Lüftergehäuses 12 ist mittels Speichen 14 (so genannte Haltespinne) ein Außenläufermotor 16 befestigt, der zum Antrieb eines Lüfterrades 18 dient, das mit Lüfterflügeln 20 versehen ist. Die Drehrichtung ist mit 21 bezeichnet.

Am Stator des Motors 16 ist ein NTC-Widerstand 22 angeordnet, der eine Überwachung der Temperatur im Inneren des Motors 16 ermöglicht.

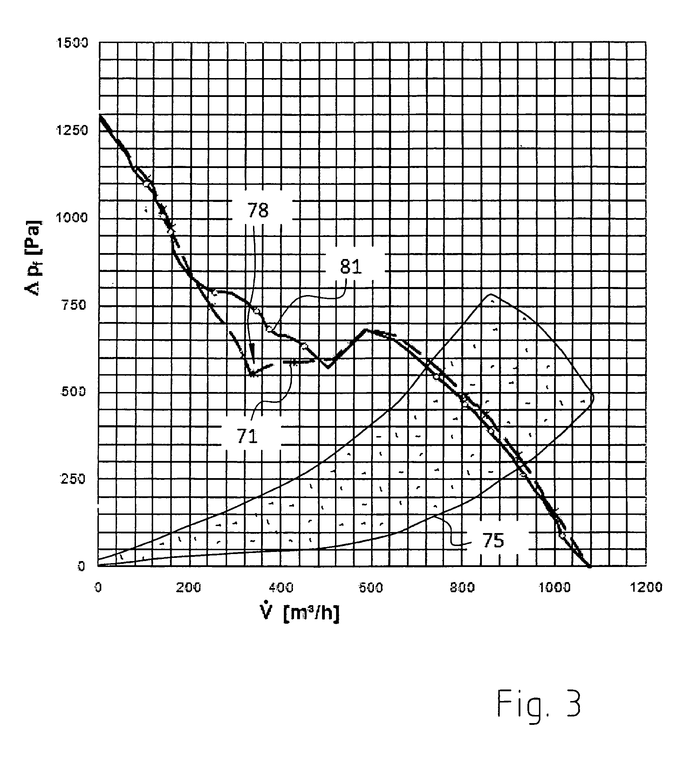

Ein solcher Lüfter hat Kennlinien, wie sie in den Fig. 3 bis 6 mit gestrichelten Linien eingetragen sind. In einem Bereich des Volumenstroms, z. B. hier von 200 bis 600 m$^3$/h, tritt ein Sattel 76 auf, also eine Diskontinuität, als Folge davon, dass dort die Luftströmung an den Lüfterflügeln 20 abreißt. In der Praxis begrenzt dieses Phänomen die Verwendung des Lüfters 10 auf höhere Werte des Volumenstroms, beim Beispiel nach den Fig. 3 bis 6 z. B. auf Werte oberhalb von etwa 600 m$^3$/h.

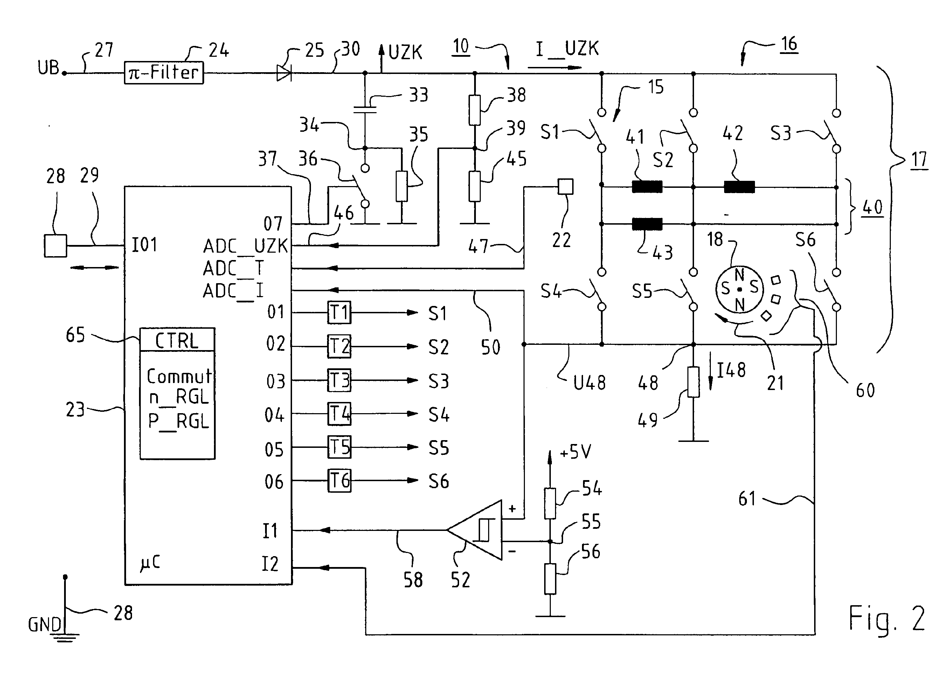

**Fig. 2** zeigt ein schematisches Schaltbild für den Lüfter 10 aus Fig. 1. Der Lüfter 10 hat einen Anschluss 27 für die Betriebsspannung UB, einen Anschluss 28 für Masse GND, einen durch ein Programm steuerbaren Mikroprozessor oder Mikrocontroller μC 23 und den Antriebsmotor 16 mit einem Stator 17 und dem Rotor 18.

Ein Steuergerät 28 (z.B. Computer) ist über eine bidirektionale Steuerleitung 29 mit einem Anschluss IO1 des μC 23 verbunden.

Die Betriebsspannung UB wird vom Anschluss 27 über ein Pi-Filter 24 und eine Verpolschutzdiode 25 zu einer Leitung 30 geführt, wo sie als Zwischenkreisspannung UZK zur Verfügung steht.

Die Leitung 30 ist über einen Zwischenkreiskondensator 33 (z.B. Elektrolytkondensator) mit einem Punkt 34 verbunden, welcher sowohl über einen Widerstand 35 als auch über einen Schalter 36 (z.B. FET) mit Masse GND verbunden ist. Der Schalter 36 ist über eine Leitung 37 mit einem Ausgang 07 des μC 23 verbunden und durch diesen steuerbar.

Die Leitung 30 ist über einen Widerstand 38 mit einem Punkt 39 verbunden, und der Punkt 39 ist über einen Widerstand 45 mit Masse GND und über eine Leitung 46 mit einem Eingang ADC_UZK des μC 23 verbunden. Die Widerstände 38, 39 bilden einen Spannungsteiler.

Ein Temperatur-Sensor 22 (z.B. integrierter Halbleiter-Temperatursensor, Thermistor, Widerstandsthermometer) ist am Stator 17 angeordnet und über eine Leitung 47 mit einem Eingang ADC_T des μC 23 verbunden.

Der Stator 17 hat eine dreiphasige Wicklungsanordnung 40 mit drei Strängen 41, 42, 43, welche beispielhaft als Dreieckschaltung verschaltet sind. Der Stator 17 hat eine Endstufe 19, welche als Vollbrückenschaltung mit drei oberen Schaltern S1, S2, S3 und drei unteren Schaltern S4, S5, S6 zwischen der Leitung 30 und einem Fußpunkt 40 ausgebildet ist, wobei den Schaltern S1 bis S6 (z.B. N-Kanal FETs, P-Kanal FETs, MOSFETs, Transistoren) jeweils eine über Ausgänge O1 bis 06 des μC 23 steuerbare Treiber-ICs T1 bis T6 zugeordnet ist.

Der Fußpunkt 48 ist über einen Fußpunkt-Widerstand 49 mit Masse GND verbunden.

Der Fußpunkt 48 ist über eine Leitung 50 mit dem Eingang ADC_I des μC 23 verbunden.

Ein Schmitt-Trigger 52 (Schwellwertschalter) ist an seinem + -Eingang mit dem Fußpunkt 48 und an seinem - Eingang mit einem Punkt 55 verbunden, an dem über einen zwischen einer Spannung +5 V und Masse GND geschalteten Spannungsteiler mit den Widerständen 54, 56 eine Referenzspannung anliegt. Der Ausgang des Schmitt-Trigger 52 ist über eine Leitung 58 mit einem Eingang I1 des μC verbunden.

Drei Rotorstellungssensoren (Rotorlagegeber) 60 (z.B. Hall-ICs, magnetoresistive (MR-) Sensoren) sind am Rotor 18 angeordnet, und deren Signale gehen über eine oder mehrere Leitungen 61 zu einem oder mehreren Eingängen I2 des μC 23. Alternativ ist auch eine sensorlose Rotorlageerkennung möglich.

**Funktionsweise**

Das Pi-Filter 24 filtert Störungen aus der Betriebsspannung UB. Die Spannung UZK am Gleichstromzwischenkreis bzw. an der Leitung 30 wird durch den Zwischenkreiskondensator 33 geglättet, und dieser kann auch Ströme aus der Endstufe 19 zwischenspeichern. Der Schalter 36 wird z.B. beim Einschalten für zwei Sekunden geöffnet, damit sich der Zwischenkreiskondensator 33 über den Widerstand 35 langsam auflädt. Hierdurch wird beim Einschalten der Einschaltstrom begrenzt, um die Spannungsquelle an den Anschlüssen 27 und 28 nicht zu stark zu belasten. Nach der vorgegebenen Zeit wird der Schalter 36 geschlossen und der Widerstand 35 somit überbrückt.

Die Zwischenkreisspannung UZK wird über den Spannungsteiler 38, 45 in einen für den µC 23 geeigneten Bereich transformiert und dem µC 23 über die Leitung 46 zugeführt, wo er dann z.B. über einen A/D-Wandler (ADC) in ein Signal U_i umgewandelt wird, welcher die momentane Zwischenkreisspannung UZK charakterisiert.

Bevorzugt werden zur Ansteuerung der Endstufenschalter S1 bis S6 Treiber-ICs T1 bis T6 verwendet. Zum einen reicht die Leistung an den Ausgängen O1 bis 06 des µC 23 üblicherweise nicht aus, um Endstufentransistoren S1 bis S6 direkt anzusteuern, und zum anderen können bei der Verwendung von Treiber-ICs sowohl für die oberen Schalter S1 bis S3 als auch für die unteren Schalter S4 bis S6 N-Kanal-FETs verwendet werden, die im Regelfall bessere Eigenschaften als P-Kanal-FETs haben.

Bevorzugt wird die Endstufe 19 durch den µC 23 getaktet angesteuert, z.B. mit einem PWM-Signal mit einem Tastverhältnis TV. Weiter bevorzugt wird die Endstufe 19 mit einer komplementären Taktung angesteuert, bei welcher der Strom bei abgeschaltetem oberen Schalter nicht über die zugeordnete - nicht dargestellte - Freilaufdiode kreist, sondern über den komplementär eingeschalteten Schalter. Eine solche Ansteuerung ist z.B. offenbart in der WO 00/28646 A2 (intern PCT219).

Der Strom am Fußpunkt 48 fließt über den Widerstand 49 gegen Masse GND, so dass die Spannung U48 am Punkt 48 proportional zum Strom I48 ist. Die Spannung U48 wird über die Leitung 50 dem µC 23 zugeführt und kann dort über einen A/D-Wandler in ein Signal I_i umgewandelt werden, welches den Strom durch den Fußpunktwiderstand 49 und damit auch den vom Zwischenkreis 30 in die Endstufe 19 fließenden Strom I_UZK charakterisiert.

Die Spannung U48 wird auch dem Schwellwertschalter 52 zur Strombegrenzung zugeführt. Der Schwellwertschalter 52 hat an seinem -Eingang eine Referenzspannung anliegen, die einem maximal zulässigen Strom I48 entspricht. Wenn die Spannung am + -Eingang größer als die Spannung am - -Eingang des Schwellwertschalters 52 wird, ändert sich das Signal 58 am Ausgang des Schwellwertschalters 52, und über den Anschluss I1 des µC 23 wird z.B. ein Interrupt ausgelöst, der den Strom durch die Endstufe 19 sehr schnell begrenzen kann. Hierzu wird z.B. das Tastverhältnis TV des PWM-Signals ganz oder teilweise reduziert.

Das Signal der Rotorstellungssensoren 60 wird dem µC 23 über den Eingang I2 zugeführt, und dieser kann daraus die Zeitpunkte für die Kommutierung der Endstufe 19 und die momentane Drehzahl n_i ermitteln.

Über das Steuergerät 28 können dem µC 23 Betriebsdaten (z.B. Solldrehzahl n_s, Sollwert für die Leistung P_S, maximale Drehzahl n_max) zugesandt werden, und in die entgegengesetzte Richtung können Betriebsdatenwerte (z.B. Fehler) übermittelt werden.

Im µC 23 ist z.B. über Software eine Steuerung CTRL 65 für den Motor 16 implementiert, welche u.a. Routinen für die Kommutierung der Endstufe (COMMUT), für die Drehzahlregelung (n_RGL) und für eine Mindest-Leistungsregelung P_RGL aufweist.


**Erfassung eines die Leistung charakterisierenden Werts P_i**

Der die aufgenommene Leistung charakterisierende Wert lässt sich aus der gemessenen Spannung U_i und dem gemessenen Strom I_i berechnen gemäß $P\_i := U\_i * I\_i$


**Ausgabe des Signals SW (Stellwert)**

Das Signal SW muss geeignet sein, die vom Motor 10 aufgenommene Leistung und damit dessen Drehzahl zu beeinflussen. Dabei kann es sich z.B. um Gleichstrommotoren oder Wechselstrommotoren, Synchronmotoren oder Asynchronmotoren handeln. Als Signal SW kann z.B. vorgegeben werden:

- ein Stellwert für eine Stromsteuerung, z.B. als Tastverhältnis für eine getaktete Endstufe, wie diese z.B. offenbart ist in der WO 00/28646 A2 (intern PCT219)
- ein Stellwert für eine Stromregelung, z.B. zur Beeinflussung des Tastverhältnisses für eine getaktete Endstufe, wie dies z.B. offenbart ist in WO 02/19510 A1 (intern PCT237)
- ein Stellwert für eine Gleichstromzwischenkreis-Spannungs-Steuerung, vgl. z.B. WO 2006/089605 (intern PCT349)
- ein Stellwert für eine Gleichstromzwischenkreis-Spannungs-Steuerung und ein Stellwert für eine Stromsteuerung, also eine Kombination aus zwei Stellwerten. Es kann z.B. sinnvoll sein, bei hohen Drehzahlen die Spannung zu erhöhen, jedoch hauptsächlich über die Stromsteuerung zu regeln.
- Drehzahlsollwert

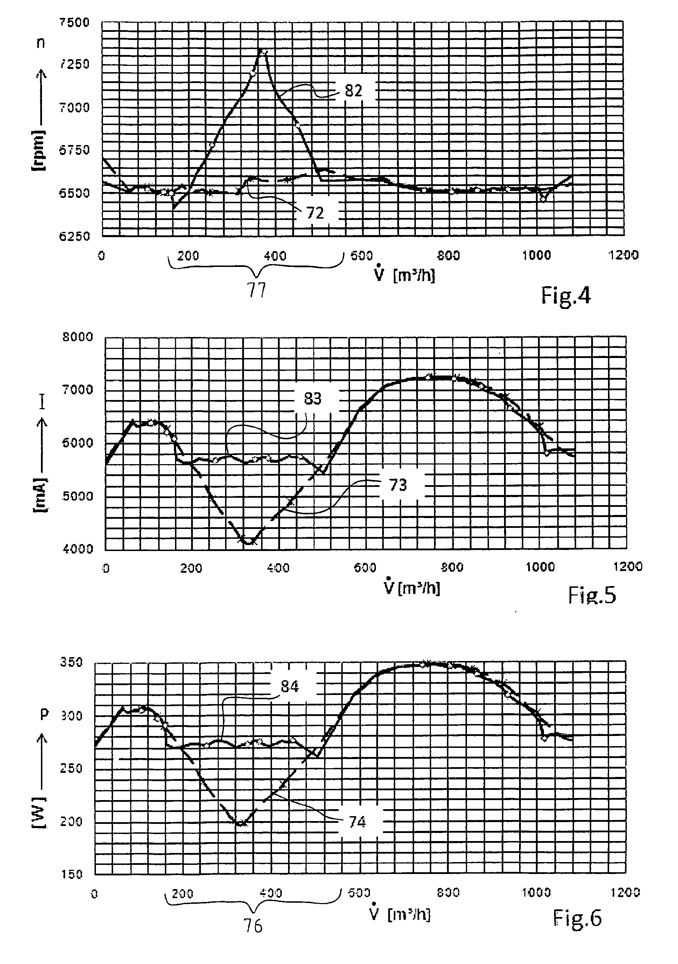

Fig. 3 zeigt ein Druckerhöhungs-Volumenstrom-Diagramm, **Fig. 4** ein Drehzahl-Volumenstrom-Diagramm, **Fig. 5** ein Strom-Volumenstrom-Diagramm und **Fig. 6** ein Leistungs-Volumenstromdiagramm.

Die gestrichelt dargestellten Kennlinien 71 (Fig. 3), 72 (Fig. 4), 73 (Fig. 5) und 74 (Fig. 6) wurden bei einem Diagonalventilator mit Drehzahlregelung auf eine Solldrehzahl n_soll = 6500 min$^{-1}$ gemessen. Die durchgezogen dargestellten Kennlinien 81 (Fig. 3), 82 (Fig. 4), 83 (Fig. 5) und 84 (Fig. 6) wurden bei einem Diagonalventilator mit Drehzahlregelung auf eine Solldrehzahl n_soll = 6500 min$^{-1}$ und zusätzlicher Regelung der Leistung auf mindestens 270 W gemessen.

Die Kurven 81, 71 werden auch als Normkennlinien bezeichnet und werden nach der Norm DIN 24163 Teil 3 in einem saugseitigen Doppelkammerprüfstand gemessen. Vereinfacht kann auch eine Messung mittels eines Lüfters und einer auf der Ausblasseite des Lüfters angeordneten Prallplatte erfolgen. Die Prallplatte wird in Richtung des Lüfters verschoben, wodurch die statische Druckdifferenz auf der Ausblasseite ansteigt, und die Druckdifferenz und der Volumenstrom werden auf der Ausblasseite gemessen.

Als Lüfterhardware wurde in beiden Fällen ein Diagonalventilator mit entsprechend angepasster Ansteuerung verwendet. Der verwendete Diagonalventilator hat einen 6-poligen Keramikmagneten, welcher schräg magnetisiert ist, eine dreiphasige Wicklung, eine Nennspannung U_nenn = 48 V, eine maximale Leistung P_max = 350 W und eine maximale mechanische Drehzahl n_max_mech = 7.500 min$^{-1}$. Der genaue Lüftertyp ist jedoch für die Regelung nicht maßgeblich.

Die Kurve 71 (reine Drehzahlregelung) hat bei einem Volumenstrom im Bereich von 1080 m$^3$/h bis 600 m$^3$/h einen ansteigenden Verlauf, so dass bei sinkendem Volumenstrom die Druckerhöhung ansteigt. Im Bereich von 600 m$^3$/h bis ca. 320 m$^3$/h fällt die Druckerhöhung dagegen ab, und im Bereich von ca. 320 m$^3$/h bis 0 m$^3$/h steigt sie wieder an, so dass sich im Bereich von ca. 200 m$^3$/h bis 600 m$^3$/h ein so genannter Sattel 78 ausbildet.

Die abfallende Druckerhöhung im Bereich von 600 m$^3$/h bis ca. 320 m$^3$/h ist nachteilig für Kühlzwecke, da sowohl der Volumenstrom als auch die Druckerhöhung absinken. Aus diesem Grund wird in der Praxis für die Lüfter ein bevorzugter Arbeitsbereich 75 angegeben, der rechts vom Sattel 78 liegt.

Die Diagramme aus Fig. 5 und Fig. 6 haben eine weitgehend identische Kurvenform, da bei der verwendeten geregelten Spannung U_const = 48 V die aufgenommene mittlere Leistung P proportional zum aufgenommenen mittleren Motorstrom I ist. Es gilt:

$$P = U\_const * I$$

Im Folgenden wird daher die aufgenommene Leistung P betrachtet, wobei bei einer Konstantspannungsregelung genauso der Strom I betrachtet werden könnte, und eine Leistungsregelung auch als kombinierte Strom- und Spannungsregelung ausgeführt werden kann.

Bei der Solldrehzahl n_soll = 6500 min$^{-1}$ tritt ein sattelförmiger Bereich 76 der aufgenommenen Leistung P auf, z. B. hier bei einem Volumenstrom von ca. 160 bis 560 m$^3$/h. In diesem sattelförmigen Bereich 76 fällt die aufgenommene Leistung P gemäß Kurve 74 (nur Drehzahlregelung) von etwa 290 W auf etwa 200 W ab. Der sattelförmige Bereich 76 entsteht dadurch, dass in diesem Bereich des Volumenstroms die Luftströmung an den Lüfterflügeln 20 abreißt. Hierdurch wird von den Lüfterflügeln weniger Drehmoment auf die geforderte Luft übertragen, und die aufgenommene Leistung P sinkt bei Drehzahlregelung im sattelförmigen Bereich 76 ab, wie das bei der Linie 74 in Fig. 6 zu sehen ist.

In der Praxis wird die Verwendung des Lüfters 10 wegen dieses Abriss-Effekts auf höhere Werte des Volumenstroms, also hier z. B. auf Werte von 600 m$^3$/h oder höher eingeschränkt bzw. vorgegeben.

Die Kurve 84 in Fig. 6 zeigt den Effekt der Drehzahlregelung mit ablösender Leistungsregelung auf mindestens 270 W.

Im sattelförmigen Bereich 76 würde die aufgenommene Leistung bei reiner Drehzahlregelung unter 270 W fallen. Daher wird in diesem Bereich die ablösende Mindest-Leistungsregelung aktiv und hält die aufgenommene Leistung bei ca. 270 W. Hierdurch wird im sattelförmigen Bereich 76 die Drehzahl von ca. 2500 min$^{-1}$ auf bis zu ca. 7350 min$^{-1}$ bei einem Volumenstrom von ca. 370 m$^3$/h erhöht, wie dies am bergförmigen Bereich 77 der Kurve 82 in Fig. 4 zu sehen ist.

Ein solcher Lüfter mit Drehzahlregelung und ablösender Mindestleistungsregelung kann auch im sattelförmigen Bereich 76 (Fig. 6) und bei noch kleinerem Volumenstrom betrieben werden, und es kann auch in diesem Bereich ein ausreichender Luftstrom z. B. für eine ausreichende Kühlung von zu kühlenden Bauteilen gewährleistet werden.

Bildlich ausgedrückt wird der sattelförmige bzw. talförmige Bereich 76 der Kurve 74 in Fig. 6 durch die ablösende Mindestleistungsregelung aufgefüllt bzw. weggebügelt.

Dabei wird der Sollwert P_s für die Mindestleistung bevorzugt derart vorgegeben, dass im sattelförmigen Bereich die Drehzahl n_i bis in den Bereich der mechanischen Grenzdrehzahl n_max_mech (hier: 7500 min$^{-1}$) des Lüfters ansteigt. Bevorzugt wird im sattelförmigen Bereich 76 eine Drehzahl n_i erreicht, die größer als 0,7 * n_max_mech ist, besonders bevorzugt größer als 0,8 * n_max_mech und besonders bevorzugt größer als 0,9 * n_max_mech ist.

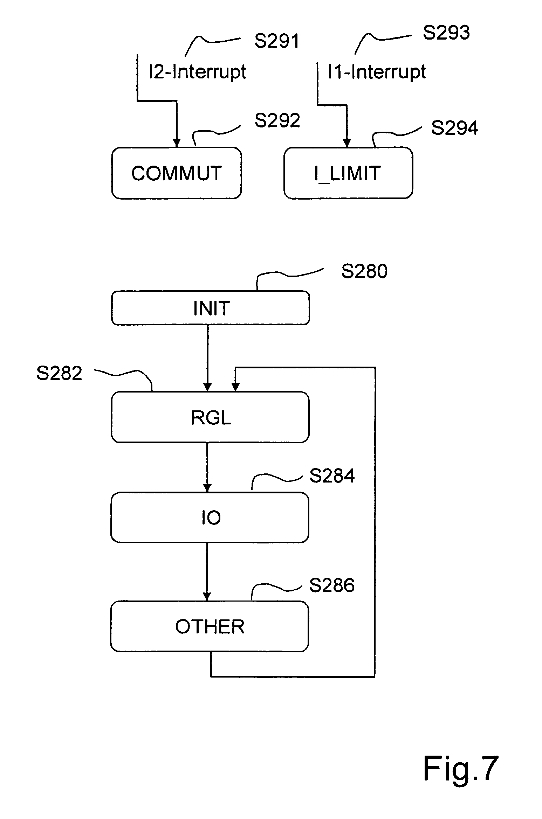

**Fig. 7** zeigt einen schematischen Überblick über das in dem μC 23 aus Fig. 2 ablaufende Programm. Beim Start des μC 23 aus Fig. 2 wird im Schritt S280 eine Initialisierung INIT durchgeführt, in der Variablen gesetzt werden, der Motor für den Start vorbereitet wird und ggf. bereits gestartet wird.

In S282 wird der Regler RGL aufgerufen, um mindestens einen Stellwert SW auszugeben.

In S284 wird eine Routine IO aufgerufen, welche die Ein- und Ausgabe über die Leitung 29 aus Fig. 2 durchführt.

Anschließend wird in S286 eine Routine OTHER aufgerufen, in der beispielsweise weitere Schritte wie eine Temperaturüberwachung durchgeführt werden.

Anschließend erfolgt ein Sprung zurück zum Schritt S282, so dass das Hauptprogramm schleifenartig durchlaufen wird.

Dabei wird die Routine RGL in S282 beispielsweise alle 0,5 Sekunden aufgerufen, um den Stellwert zu ermitteln.

Ein I2-Interrupt des Eingangs I2 aus Fig. 2 ist mit S291 bezeichnet, und ein I1-Interrupt des Eingangs I1 aus Fig. 2 mit S293.

Durch den I2-Interrupt S291 wird eine Interrupt-Routine COMMUT S292 aufgerufen, die die Kommutierung der Endstufe 19 steuert. Bei einer Kommutierung mit Vorzündung bzw. Frühzündung werden üblicherweise zusätzlich Timer verwendet, die über entsprechende Timer-Interrupts (nicht dargestellt) die Kommutierung steuern.

Über den I1-Interrupt S293 wird eine Interrupt-Routine S294 aufgerufen, wenn ein Überstrom am Fußpunkt 48 aus Fig. 2 auftritt. Die Interrupt-Routine S294 setzt daraufhin die Ausgänge O1 bis O6 aus Fig. 2 so, dass der Überstrom schnell abklingt.

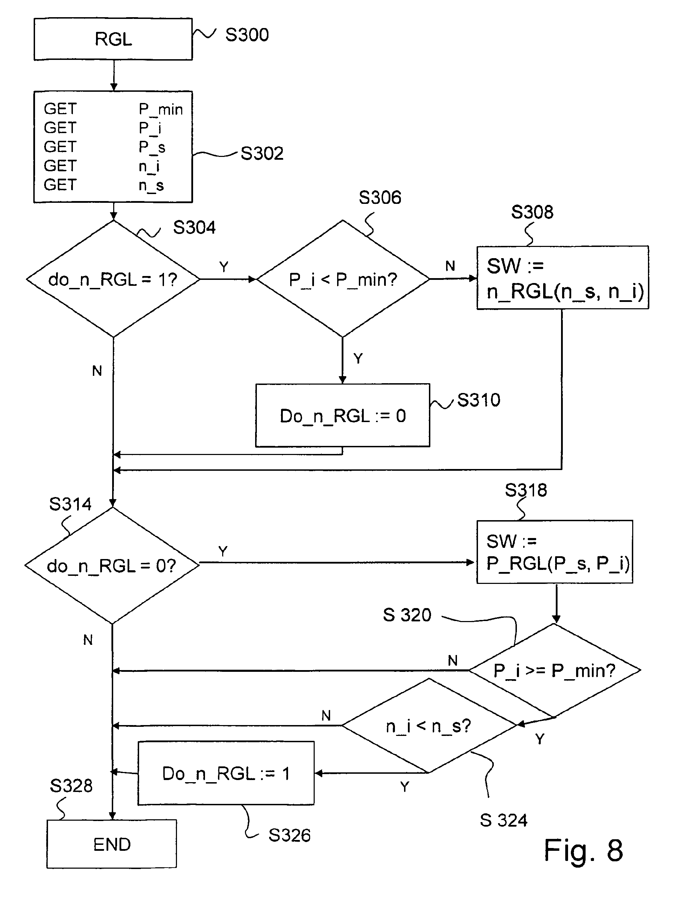

**Fig. 8** zeigt ein Ausführungsbeispiel für einen Regler RGL, welcher in dem µC 23 aus Fig. 2 als Software ausgebildet ist.

Beim Start des Motors wird im Schritt S280 aus Fig. 7 während der Initialisierung u. a. die folgende Variable gesetzt:

$$do\_n\_RGL := 1$$

Die Variablen P_min (Leistung, bei der auf die Leistungsregelung umgeschaltet wird), P_s (Sollwert für die Leistungsregelung) und n_s (Sollwert für die Drehzahlregelung) werden auf vorgegebene Werte gesetzt. Die Routine RGL S300 wird im Betrieb in vorgegebenen Abständen aufgerufen und bestimmt den Stellwert SW zur Beeinflussung des Motors 10.

Im Schritt S302 werden aktuelle Werte für die Variablen P_i, n_i, P_min, P_s, n_s geholt bzw. berechnet (z.B. P_i := U_i * I_i). Im Schritt S304 wird überprüft, ob die Variable do_n_RGL den Wert 1 hat, ob also eine Drehzahlregelung durchgeführt werden soll. Falls JA, wird im Schritt S306 überprüft, ob die momentan aufgenommene Leistung P_i kleiner als die Mindestleistung P_min ist.

Falls NEIN, wird im Schritt S308 eine Drehzahlregelung durchgeführt und ein entsprechender Stellwert SW ermittelt und ggf. gleich ausgegeben. Anschließend wird zum Schritt S314 gesprungen.

Falls JA, wird im Schritt S310 die Variable do_n_RGL auf Null gesetzt, wodurch die Drehzahlregelung aus- und die Leistungsregelung eingeschaltet wird. Dies kann z.B. dann der Fall sein, wenn ein Luftfilter eines Lüfters verstopft ist. Hierdurch ändern sich die Druckverhältnisse und der Volumenstrom, und es kommt zu einem Strömungsabriss an den Lüfterflügeln. Die Unterschreitung der Mindestleistung P_min ist bei den meisten Lüftertypen ein klares Zeichen dafür, dass die Strömung bereits abgerissen ist. Anschließend wird zum Schritt S314 gesprungen. Die Überprüfung bei S306 kann alternativ nach dem Aufruf des Drehzahlreglers S308 erfolgen.

Im Schritt S314 wird anhand der Variablen do_n_RGL überprüft, ob eine Leistungsregelung durchgeführt werden soll (Wert Null).

Falls ja, wird im Schritt S318 eine Leistungsregelung P_RGL S318 durchgeführt und der Stellwert SW entsprechend ermittelt und ggf. gleich ausgegeben. Anschließend wird im Schritt S320 überprüft, ob die aktuelle Leistung P_i größer oder gleich der Mindestleistung P_min ist.

Falls nein, wird zum Ende S328 gesprungen, da die aktuelle Leistung P_i durch den Leistungsregler S318 weiter erhöht werden muss.

Falls ja, wird zum Schritt S324 gesprungen.

Im Schritt S324 wird überprüft, ob die aktuelle Drehzahl n_i kleiner als die Solldrehzahl n_s ist.

Falls ja, befindet sich der Motor in einem Bereich der Kennlinie, in dem die aufgenommene Leistung bei der Solldrehzahl n_s größer als die Mindestleistung P_min ist. In diesem Fall wird in S326 die Variable do_n_RGL auf den Wert 1 gesetzt, um wieder die Drehzahlregelung zu aktivieren, und anschließend wird zum Ende S328 gesprungen. Falls das Ergebnis im Schritt S324 dagegen nein war, wird zum Ende S328 gesprungen, und beim nächsten Aufruf wird weiterhin eine Leistungsregelung durchgeführt.

Bei der Leistungsregelung im Schritt S318 wird die momentane Leistung P_i auf den Sollwert P_s geregelt. Der Sollwert P_s kann dabei dem Wert P_min für die Mindestleistung entsprechen. Die Mindestleistung P_min kann jedoch auch kleiner sein (z.B. P_min := 0,9 * P_s), damit das Umschalten auf Leistungsregelung in S306 nicht bereits bei einem kurzzeitigen Erreichen des Sollwerts P_s erfolgt, sondern erst bei einem niedrigeren Wert P_min.

Im Ergebnis wird entweder eine Drehzahlregelung in S308 durchgeführt, oder aber eine Leistungsregelung in S318. Durch die Überprüfung in S306 erfolgt bei Unterschreitung der Mindestleistung P_min ein Wechsel zur Leistungsregelung bzw. eine Deaktivierung der Drehzahlregelung und Aktivierung der Leistungsregelung, und im Falle der Leistungsregelung erfolgt in S324 bei Unterschreitung der Solldrehzahl n_s ein Wechsel zur Drehzahlregelung bzw. eine Deaktivierung der Leistungsregelung und Aktivierung der Drehzahlregelung.

Alternativ kann die Überprüfung in S320 entfallen, so dass von S318 direkt zu S324 gesprungen wird, wenn z.B. der Leistungsregler in S320 im Regelfall zu einem schnellen Erreichen der Soll-Leistung P_s führt.

Alternativ kann der Wechsel von der Leistungsregelung zurück zur Drehzahlregelung gemäß S324 entfallen oder an eine zusätzliche Bedingung (z.B. Ablauf einer vorgegebenen Zeitdauer seit dem Umschalten auf die Leistungsregelung, externer Befehl oder Reset) geknüpft sein

### P_min mit Abhängigkeit von n_s

Bevorzugt wird der Wert P_min für die Mindestleistung auf einen für die Solldrehzahl n_s geeigneten Wert gesetzt, z.B. anhand der Lüfterkennlinie für eine Drehzahlregelung auf die Solldrehzahl.

Weiter bevorzugt wird der Wert P_min in Abhängigkeit von der Solldrehzahl n_s gewählt bzw. berechnet, also P_min = f(n_s). Hierdurch wird eine an die Solldrehzahl n_s angepasste Mindestleistung P_min vorzugeben.

Wenn z.B. eine niedrige Solldrehzahl n_s vorgegeben wird, wird die aufgenommene Leistung P_i ebenfalls niedrig sein. Eine hohe Mindestleistung P_min würde dann dazu führen, dass die Leistungsregelung (fast) immer aktiv ist.

Aus dem Zusammenhang

$$P1 \cdot (n2/n1)^3 = P2,$$

der bei konstantem Druck (dp=0) für ein erstes Leistungs/Drehzahl-Paar P1, n1 und ein zweites Leistungs/Drehzahl-Paar P2, n2 gilt, kann P_min aus n_s berechnet werden.

Es ist allerdings erforderlich, dass die "Lüfterkonstante" eingegeben wird. Hierzu kann z.B. vorgegeben werden, dass der Lüfter bei seiner maximalen Drehzahl 6700rpm eine Leistung von 300W aufnimmt. Daraus ergibt sich ein geeigneter Wert für n_s mittels

$$P\_min = 300W \cdot (n\_s/6700rpm)^3$$

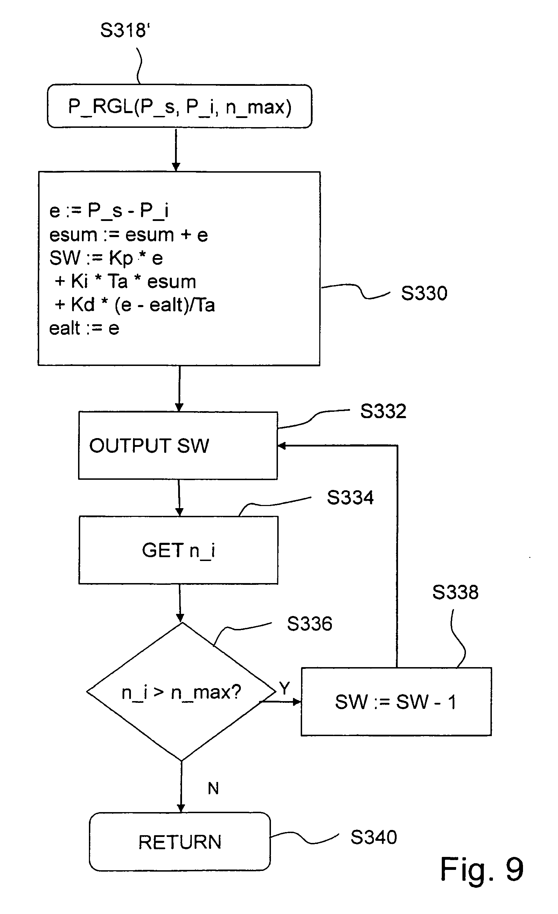

Fig. 9 zeigt einen Leistungsregler S318', wie er im Schritt S318 in Fig. 8 verwendet werden kann. Der Leistungsregler "P_RGL(P_s, P_i, n_max)" S318' enthält neben der Leistungsregelung zusätzlich auch eine Drehzahlbegrenzung auf eine Maximaldrehzahl n_max.

In S330 wird ein PID-Regler ausgeführt. Im Folgenden wird die Bedeutung der Variablen aufgelistet.

| | |
|---|---|
| e | Regelabweichung |
| esum | Summe der bisherigen Regelabweichungen e für den I-Anteil |
| SW | Stellwert (Stellgröße) |
| Kp | Verstärkungsfaktor für den P-Anteil |
| Ki | Faktor für den I-Anteil |
| Ta | Abtastzeit |
| Kd | Faktor für den D-Anteil |
| ealt | Alte Regelabweichung für den D-Anteil |

Sofern der PID-Regler S330 in regelmäßigen Abständen aufgerufen wird (z.B. alle 0,5 Sekunden), ist die Abtastzeit Ta konstant und kann in die Faktoren Ki bzw. Kd integriert werden.

Die Verwendung eines PID-Reglers hat sich als vorteilhaft erwiesen, es ist jedoch auch beispielsweise eine Verwendung eines PI-Reglers oder PD-Reglers möglich.

In S332 wird der Stellwert SW ausgegeben (OUTPUT SW). Im Schritt S334 wird anschließend (ggf. nach einer vorgegebenen Zeitdauer) die aktuelle Drehzahl n_i ermittelt (GET n_i). In S336 (n_i > n_max?) wird überprüft, ob die aktuelle Drehzahl größer als die Maximaldrehzahl n_max ist. Falls ja, wird der Stellwert SW in S338 um einen vorgegebenen Wert DEC_VAL (z.B. 1) verringert und durch einen Sprung zum Schritt S332 ausgegeben. Dies erfolgt so lange, bis die Drehzahl kleiner oder gleich der Maximaldrehzahl n_max ist. Hierdurch erfolgt eine Drehzahlbegrenzung, um den Motor vor Zerstörung zu schützen. Anschließend wird zu S340 gesprungen und die Reglerroutine verlassen.

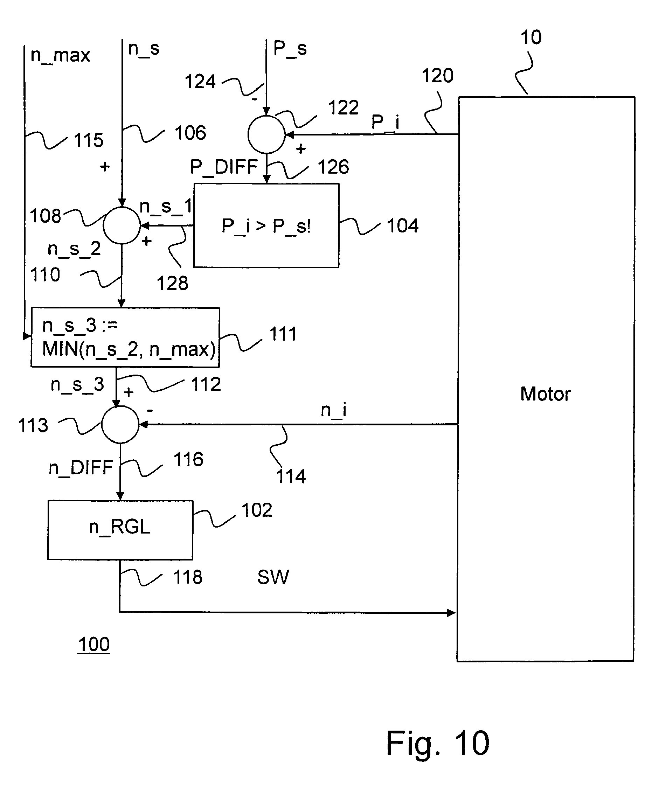

**Fig. 10** zeigt ein Ausführungsbeispiel für einen Drehzahlregler mit ablösender Mindestleistungsregelung.

Einem Motor 10 sind ein Drehzahlregler n_RGL 102 und ein Mindestleistungsregler P_i > P_min! 104 zugeordnet.

Über eine Leitung 106 wird ein Signal n_s (Solldrehzahl) einem Addierer 108 zugeführt. Ein Signal n_s_2 wird vom Ausgang des Addierers 108 über eine Leitung 110 einem Differenzbildner 113 zugeführt. Dem Differenzbildner 113 wird über eine Leitung 114 ein Signal n_i (Drehzahl-Istwert) vom Motor 10 zugeführt. Ein Signal n_DIFF wird vom Ausgang des Differenzbildners 113 über eine Leitung 116 dem Drehzahlregler 102 zugeführt. Ein Signal SW (Stellwert) wird über eine Leitung 118 vom Drehzahlregler 102 zum Motor 10 übertragen, und der Stellwert SW beeinflusst die Motorleistung und / oder die Drehzahl des Motors 10.

Ein Signal P_i (aufgenommene Leistung des Motors 10) wird über eine Leitung 120 einem Differenzbildner 122 zugeführt, und diesem wird auch ein Signal P_min (geforderte Mindestleistung) über eine Leitung 124 zugeführt. Ein Signal P_diff (Differenz zwischen P_min und P_i) wird über die Leitung 126 dem Leistungsregler 104 zugeführt. Ein Signal n_s_1 wird vom Ausgang des Leistungsreglers 104 über eine Leitung 128 dem Addierer 108 zugeführt.

**Funktionsweise**

Der Leistungsregler 104 ist inaktiv, solange die vom Motor 10 aufgenommene Leistung P_i größer als die Mindestleistung P_min oder gleich dieser ist. In diesem Zustand wird das Signal n_s im Addierer 108 nicht beeinflusst, und über die Drehzahlbegrenzung 111, den Differenzbildner 113 und den Drehzahlregler 102 wird eine Drehzahlregelung des Motors 10 durchgeführt, indem das Signal SW des Drehzahlreglers 102 an den Motor 10 ausgegeben wird.

Das Signal SW beeinflusst die vom Motor aufgenommene Leistung und damit auch die Drehzahl. Es kann z. B.

- als Vorgabe für das Tastverhältnis einer mit einem PWM-Signal getakteten Endstufe,
- als Vorgabe für eine Motorstromsteuerung,
- als Vorgabe für eine Leistungssteuerung oder
- als Vorgabe für eine Steuerung der an der Endstufe anliegenden Spannung verwendet werden.

Der Leistungsregler 104 wird aktiv, wenn die vom Motor 10 aufgenommene Leistung P_i kleiner als die Mindestleistung P_min ist. In diesem Zustand gibt der Leistungsregler 104 ein Signal $n\_s\_1 \neq 0$ aus, und dieses verändert das Signal n_s gemäß

$$n\_s\_2 := n\_s + n\_s\_1$$

Das Signal n_s_2, welches den Sollwert der Drehzahl für den Drehzahlregler 102 darstellt, wird hierdurch erhöht, und dies führt auch zu einem geänderten Signal SW und damit einer höheren Leistung P_i des Motors 10. Dabei stellt der Drehzahlbegrenzer n_s_3 := MIN(n_s_2, n_max) sicher, dass die Solldrehzahl n_s_3 nicht größer als die vorgegebene Maximaldrehzahl n_max wird, indem n_s_3 auf den kleineren Wert (Minimum) von n_s_2 bzw. n_max gesetzt wird. So kann der Leistungsregler 104 nicht zu einer Zerstörung des Motors durch eine zu hohe Drehzahl führen.

Im Ergebnis bewirkt die Leistungsregelung 104, dass die vom Motor 10 aufgenommene Leistung P_i im Betrieb mindestens so groß wie die vorgegebene Leistung P_min ist. Zwar beeinflussen beide Regler n_RGL 102 und P_i > P_s! 104 (insbesondere über den Addierer 108) den Stellwert SW, im Ergebnis der Zusammenarbeit der Regler wird der Stellwert SW jedoch je nach Arbeitsbereich entweder vom Drehzahlregler n_RGL 102 oder vom Mindest-Leistungsregler P_i > P_s! 104 bestimmt, so dass entweder eine Regelung auf die vorgegebene Drehzahl n_s oder aber eine Regelung auf die Mindestleistung P_s erfolgt.

Da die Leistung P_i beim Starten des Motors 10 (vor dem Anlaufen) kleiner als die Leistung P_min sein kann, wird die Leistungsregelung bevorzugt erst nach einer vorgegebenen Zeit nach dem Start des Motors (z. B. 3 Sekunden) oder aber nach dem Erreichen einer vorgegebenen Drehzahl (z. B. 1000 min⁻¹) aktiviert.

Beim Einsatz eines solchen Lüfters 10 kann es in bestimmten Anwendungsfällen vorteilhaft sein, im Falle einer Aktivierung der Leistungsregelung 104 zumindest zeitweise vollständig auf diese umzustellen. So sind z. B. bei der Anwendung der Lüfter in einem Schaltschrank im Bereich der Lufteinlässe Filtermatten bzw. Fließe vorgesehen, und solange diese die Luft gut durchlassen, soll der Lüfter leise und mit konstanter Drehzahl laufen. Wird jedoch mit der Zeit die Filtermatte verstopft, so ändert sich der Druckunterschied zwischen der Innenseite und der Außenseite des Schaltschranks, und es fließt ein geringerer Volumenstrom. Sinkt dabei die Leistung P_i unter den Mindestwert P_min ab, so wird der Lüfter andauernd auf Leistungsregelung umgestellt. Nach einem Reset oder Neustart des Lüfters wird dann erneut versucht, eine Drehzahlregelung durchzuführen.

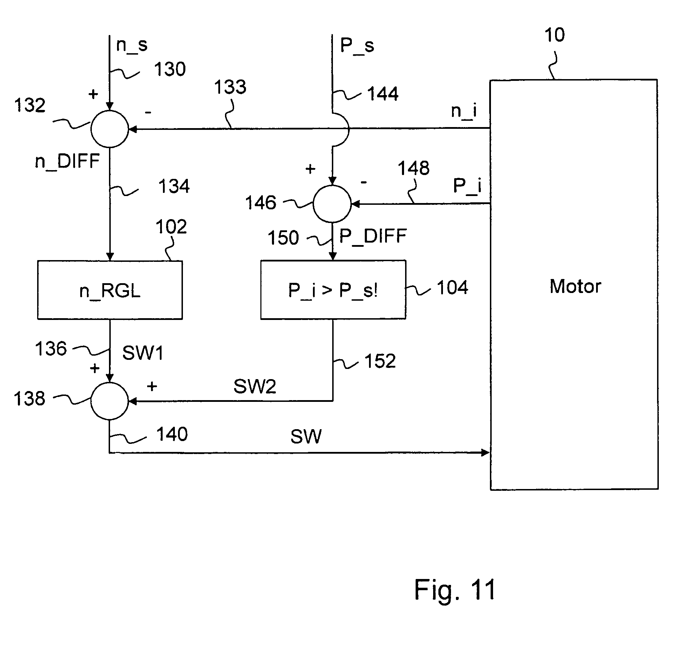

**Fig. 11** zeigt eine Variante der Regelung aus Fig. 10, wobei die ablösende Leistungsregelung hinter dem Drehzahlregler einwirkt.

Einem Differenzbildner 132 wird über eine Leitung 130 das Signal $n\_s$ und über eine Leitung 133 das Signal $n\_i$ mit der momentanen Drehzahl des Motors 10 zugeführt. Die gebildete Differenz $n\_DIFF$ wird über eine Leitung 134 dem Drehzahlregler $n\_RGL$ 102 zugeführt. Das vom Drehzahlregler 102 gebildete Signal SW1 (Stellwert 1) wird über eine Leitung 136 einem Addierer 138 zugeführt, und über dessen Ausgangsleitung 140 wird ein Signal SW (Stellwert) dem Motor 10 zugeführt.

Einem Differenzbildner 146 werden über eine Leitung 144 das Signal $P\_s$ und über eine Leitung 148 das Signal $P\_i$ (momentane Leistung des Motors 10) zugeführt. Die Differenz $P\_DIFF$ wird über eine Leitung 150 dem Mindest-Leistungsregler $P\_i > P\_s!$ 104 zugeführt. Das vom Mindest-Leistungsregler 104 gebildete Signal SW2 (Stellwert 2) wird über eine Leitung 152 dem Addierer 138 zugeführt.

Die Einschleusung der Mindestleistungsregelung 104 im Addierer 108 und damit unterhalb des Drehzahlreglers 102 kann in bestimmten Fällen zu einer schnelleren Antwort des Motors 10 auf die Beeinflussung durch den Leistungsregler 104 führen. Dies ist z. B. dann der Fall, wenn im Drehzahlregler 102 ein hoher I-Anteil vorgesehen ist.

An Stelle des Addierers 138 könnte z. B. auch eine - nicht dargestellte - Vergleichsvorrichtung vorgesehen werden, die das Signal SW wie folgt ermittelt SW := MAX(SW1, SW2).

Es würde somit das größere Signal der Signale SW1 und SW2 als Signal SW verwendet werden.

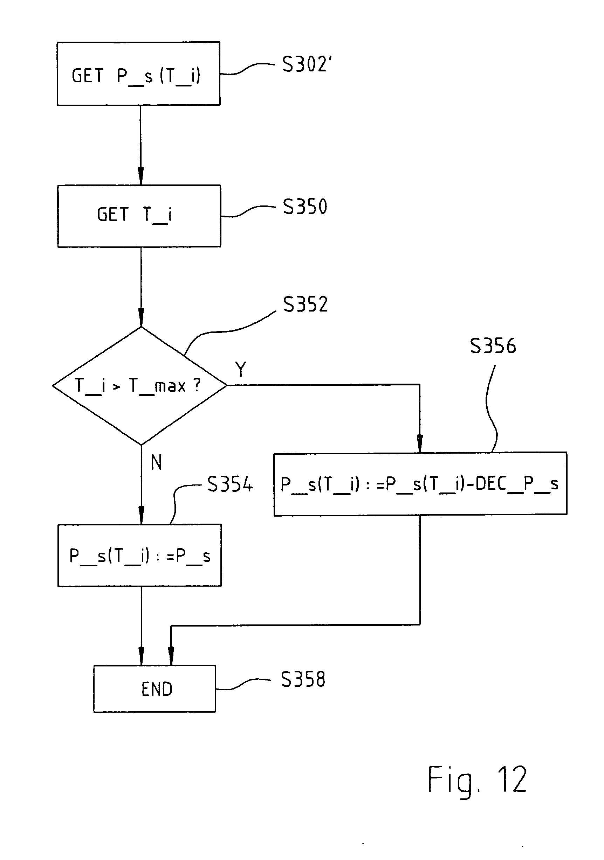

**Fig. 12** zeigt ein Flussdiagramm für die Erzeugung eines temperaturabhängigen Sollwerts $P\_s(T\_i)$ für die Leistungsregelung, wobei der Wert $P\_s(T\_i)$ in allen vorhergehenden Ausführungsbeispielen eingesetzt werden kann, um eine Zerstörung des Motors wegen zu hoher Temperatur zu vermeiden.

Die Routine GET $P\_s(T\_i)$ S302' kann z.B. im Schritt S302 aus Fig. 8 ausgeführt werden.

In S350 wird der aktuelle Temperaturwert $T\_i$ ermittelt. In S352 wird geprüft, ob der aktuelle Temperaturwert $T\_i$ größer als ein vorgegebener maximal zulässiger Temperaturwert $T\_max$ ist.

Falls nein, ist die Temperatur in Ordnung, und in S354 wird der Wert $P\_s(T\_i)$ auf den vorgegebenen Sollwert $P\_s$ gesetzt und zum Ende S358 gesprungen.

Falls ja, ist die Temperatur zu hoch, und in S356 wird der Wert $P\_s(T\_i)$ um einen vorgegebenen Wert DEC_P_s (z.B. 1 oder 5) verringert und zum Ende S358 gesprungen.

Hierdurch wird die Leistung und damit auch die durch diese beeinflusste Temperatur $T\_i$ über den Stellwert SW verringert, und die Temperatur steigt nicht über den Grenzwert $T\_max$. Hiermit ist eine Temperaturbegrenzung auf den Wert $T\_max$ möglich.

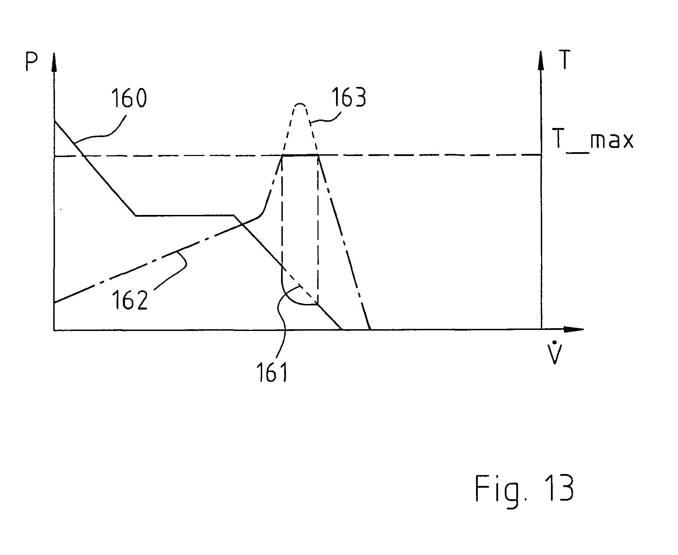

**Fig. 13** zeigt eine Kennlinie 160 im Diagramm Volumenstrom-Druckerhöhung, und zusätzlich ist die Temperatur $T\_i$ 162 über den Volumenstrom dV/dt eingezeichnet. Im Bereich 163 würde die Temperatur $T\_i$ bei einem temperaturunabhängigen Sollwert $P\_s$ für den Leistungsregler $P\_RGL$ über die maximal zulässige Temperatur $T\_max$ ansteigen, und dies könnte zu einer Zerstörung des Motors führen.

Durch den temperaturabhängigen Sollwert $P\_s(T\_i)$ wird die Kurve 160 im Bereich 163 auf Grund der sinkenden Leistung und Drehzahl von 161 aus abgesenkt, und hierdurch wird die Temperatur $T\_i$ auf $T\_max$ begrenzt.

Naturgemäß sind im Rahmen der Erfindung viele Abwandlungen und Modifikationen möglich.

So sind alle Lüftertypen wie z.B. Axial-, Diagonal- und Radiallüfter geeignet.

Die Vorrichtung zur Erzeugung eines Temperatursignals $T\_i$ kann z.B. wie folgt ausgebildet sein:

a) Temperatursensor zur Messung der Temperatur ($T\_i$) in der Elektronik des Antriebsmotors 16
b) Temperatursensor zur Messung der Temperatur ($T\_i$) im Stator
c) Vorrichtung zur Bestimmung der Temperatur ($T\_i$) aus einer Messung des temperaturabhängigen Widerstands der Statorwicklung
d) Vorrichtung zur Bestimmung der Temperatur ($T\_i$) aus einer Messung der temperaturabhängigen Induktivität in der Statorwicklung, die durch die Rotormagneten bewirkt wird (Motor-Induktivität).

Die Fig. 1 bis Fig. 13 zeigen einen Lüfter, welcher aufweist: Einen Antriebsmotor mit einem Lüfterrotor, eine Vorrichtung zur Erzeugung eines Drehzahlsignals $n\_i$, welches die Drehzahl des Lüfterrotors charakterisiert, eine Vorrichtung zur Erzeugung eines Leistungssignals $P\_i$, welches die vom Antriebsmotor aufgenommene Leistung charakterisiert, einen ersten Regler $n\_RGL$ zur Regelung des Drehzahlsignals $n\_i$ auf einen vorgegebenen Drehzahl-Sollwert $n\_s$, einen zweiten Regler $P\_RGL$ zur Regelung des Leistungssignals $P\_i$ auf einen vorgegebenen Leistungssignal-Sollwert $P\_s$, welcher einer vorgegebenen Mindest-Aufnahmeleistung $P\_min$ entspricht, wobei der erste Regler $n\_RGL$ und der zweite Regler $P\_RGL$ mindestens einen Stellwert SW an den Antriebsmotor ausgeben und derart zusammen wirken, dass im Betrieb der mindestens eine Stellwert SW

- in einem ersten Zustand durch den ersten Regler $n\_RGL$ bestimmt ist, und
- in einem zweiten Zustand durch den zweiten Regler $n\_RGL$ bestimmt ist,

wobei beim Vorliegen einer ersten Bedingung mit mindestens einem ersten Kriterium ein erster Wechsel vom ersten Zustand zum zweiten Zustand erfolgt.

Erfindungsgemäß weist die erste Bedingung das Kriterium auf, dass das Leistungssignal P_i einer aufgenommenen Leistung entspricht, die kleiner als die Mindest-Aufnahmeleistung P_min ist, um das Leistungssignal P_i so zu beeinflussen, dass es einer aufgenommenen Leistung entspricht, die gleich wie oder größer als die Mindest-Aufnahmeleistung P_min ist.

Bevorzugt weist die erste Bedingung zusätzlich das Kriterium auf, dass das Drehzahlsignal n_i mindestens so groß wie eine vorgegebene Drehzahl ist, wobei die vorgegebene Drehzahl bevorzugt dem Drehzahl-Sollwert n_s entspricht.

Bevorzugt wirken der erste Regler n_RGL und der zweite Regler P_RGL derart zusammen, dass der zweite Zustand nach einem ersten Wechsel zumindest zeitweise auch dann beibehalten wird, wenn die momentane Drehzahl kleiner als die durch den ersten Regler n_RGL vorgegebene Drehzahl ist.

Bevorzugt wirken der erste Regler n_RGL und der zweite Regler P_RGL derart zusammen, dass beim Vorliegen einer zweiten Bedingung mit mindestens einem zweiten Kriterium ein zweiter Wechsel vom zweiten Zustand zum ersten Zustand erfolgt.

Bevorzugt weist die zweite Bedingung das Kriterium auf, dass das Drehzahlsignal n_i kleiner als der Drehzahl-Sollwert n_s ist.

Bevorzugt weist die zweite Bedingung zusätzlich das Kriterium auf, dass das Leistungssignal P_i einer aufgenommenen Leistung entspricht, die mindestens so groß wie die Mindest-Aufnahmeleistung P_min ist

Bevorzugt weist die Lüfterkennlinie Volumenstrom/Leistung einen Sattelbereich 76 auf, und die vorgegebene Mindest-Aufnahmeleistung P_min ist derart gewählt, dass der Stellwert SW im Sattelbereich zumindest teilweise durch den zweiten Regler P_RGL und außerhalb des Sattelbereichs zumindest teilweise durch den ersten Regler n_RGL bestimmt ist.

Bevorzugt weist der Lüfter eine Drehzahlbegrenzungsvorrichtung n_i < n_max! zur Begrenzung des Drehzahlsignals n_i auf einen Drehzahlsignal-Grenzwert n_max auf, welcher Drehzahlsignal-Grenzwert n_max einer vorgegebenen maximalen Drehzahl entspricht, wobei der erste Regler n_RGL, der zweite Regler P_RGL und die Drehzahlbegrenzungsvorrichtung den mindestens einen Stellwert SW an den Antriebsmotor ausgeben und derart zusammen wirken, dass im Betrieb die vorgegebene maximale Drehzahl nicht überschritten wird.

Bevorzugt weist der Lüfter eine Vorrichtung zur Erzeugung eines Temperatursignals T_i auf, welches eine Motortemperatur charakterisiert, der Leistungssignal-Sollwert P_s für den Leistungsregler 36 wird in Abhängigkeit vom Temperatursignal T_i verändert, um eine Überlastung des Antriebsmotors 16 oder seiner Elektronik zu vermeiden.

Bevorzugt wird der Leistungssignal-Sollwert P_s verringert, wenn das Temperatursignal T_i einer Temperatur entspricht, die mindestens so groß wie ein vorgegebener maximaler Temperaturwert T_max ist.

Die Fig. 1 bis Fig. 13 zeigen einen Lüfter, welcher aufweist: Einen Antriebsmotor mit einem Lüfterrotor, einen ersten Regler n_RGL zur Regelung der Drehzahl des Lüfterrotors auf einen Drehzahl-Sollwert n_s, eine Vorrichtung zur Erzeugung eines Leistungssignals, welches die vom Antriebsmotor aufgenommene Leistung charakterisiert, einen zweiten Regler, welcher dann, wenn das Leistungssignal bei der momentanen Drehzahl unter einen vorgegebenen Leistungssignal-Grenzwert sinkt, eine Regelung des Leistungssignals auf einen vorgegebenen Leistungssignal-Sollwert bewirkt.

Die Fig. 1 bis Fig. 13 zeigen einen Lüfter mit einem Lüfterrotor 18, einem Lüftergehäuse 12, und einem Antriebsmotor 16, welcher Lüfter einen sog. Sattel 76 seiner Lüfterkennlinie aufweist, an welchem die Leistungsaufnahme des Lüfters 10 reduziert ist, welchem Antriebsmotor 16 ein Leistungsregler 36 zugeordnet ist, dessen Ausgangssignal in ein Signal n = f (P) für die Drehzahl des Lüfters 10 umgewandelt wird, um durch eine Drehzahlerhöhung im Bereich des Sattels die dortige Leistungsaufnahme des Lüfters 10 zu erhöhen.

**Patentansprüche**

1. Lüfter, welcher aufweist:

   Einen Antriebsmotor mit einem Lüfterrotor;
   eine Vorrichtung zur Erzeugung eines Drehzahlsignals (n_i), welches die Drehzahl des Lüfterrotors charakterisiert,
   eine Vorrichtung zur Erzeugung eines Leistungssignals (P_i), welches die vom Antriebsmotor aufgenommene Leistung charakterisiert;
   einen ersten Regler (n_RGL) zur Regelung des Drehzahlsignals (n_i) auf einen vorgegebenen Drehzahl-Sollwert (n_s);
   einen zweiten Regler (P_RGL) zur Regelung des Leistungssignals (P_i) auf einen vorgegebenen Leistungssignal-Sollwert (P_s), welcher einer vorgegebenen Mindest-Aufnahmeleistung (P_min) entspricht, wobei der erste Regler (n_RGL) und der zweite Regler (P_RGL) mindestens einen Stellwert (SW) an den Antriebsmotor ausgeben und derart zusammen wirken, dass im Betrieb der mindestens eine Stellwert (SW)

- in einem ersten Zustand durch den ersten Regler (n_RGL) bestimmt ist, und
- in einem zweiten Zustand durch den zweiten Regler (P_RGL) bestimmt ist, wobei beim Vorliegen einer ersten Bedingung mit mindestens einem ersten Kriterium ein erster Wechsel vom ersten Zustand zum zweiten Zustand erfolgt, wobei die erste Bedingung das Kriterium aufweist, dass das Leistungssignal (P_i) einer aufgenommenen Leistung entspricht, die kleiner als die Mindest-Aufnahmeleistung (P_min) ist, um das Leistungssignal (P_i) so zu beeinflussen, dass es einer aufgenommenen Leistung entspricht, die gleich oder größer als die Mindest-Aufnahmeleistung (P_min) ist.

2. Lüfter nach Anspruch 1,
bei welchem die erste Bedingung zusätzlich das Kriterium aufweist, dass das Drehzahlsignal (n_i) mindestens so groß wie eine vorgegebene Drehzahl ist, wobei die vorgegebene Drehzahl bevorzugt dem Drehzahl-Sollwert (n_s) entspricht.

3. Lüfter nach Anspruch 1 oder 2, bei welchem der erste Regler (n_RGL) und der zweite Regler (P_RGL) derart zusammen wirken, dass der zweite Zustand nach einem ersten Wechsel zumindest zeitweise auch dann beibehalten wird, wenn die momentane Drehzahl kleiner als die durch den ersten Regler (n_RGL) vorgegebene Drehzahl ist.

4. Lüfter nach Anspruch 1 oder 2, bei welchem der erste Regler (n_RGL) und der zweite Regler (P_RGL) derart zusammen wirken, dass beim Vorliegen einer zweiten Bedingung mit mindestens einem zweiten Kriterium ein zweiter Wechsel vom zweiten Zustand zum ersten Zustand erfolgt.

5. Lüfter nach Anspruch 4, bei welchem die zweite Bedingung das Kriterium aufweist, dass das Drehzahlsignal (n_i) kleiner als der Drehzahl-Sollwert (n_s) ist.

6. Lüfter nach Anspruch 5, bei welchem die zweite Bedingung zusätzlich das Kriterium aufweist, dass das Leistungssignal (P_i) einer aufgenommenen Leistung entspricht, die mindestens so groß wie die Mindest-Aufnahmeleistung (P_min) ist

7. Lüfter nach einem der vorhergehenden Ansprüche, bei welchem die Lüfterkennlinie Volumenstrom/Leistung einen Sattelbereich (76) aufweist, und bei welchem die vorgegebene Mindest-Aufnahmeleistung (P_min) derart gewählt ist, dass der Stellwert (SW) im Sattelbereich zumindest teilweise durch den zweiten Regler (P_RGL) und außerhalb des Sattelbereichs zumindest teilweise durch den ersten Regler (n_RGL) bestimmt ist.

8. Lüfter nach einem der vorhergehenden Ansprüche, welcher eine Drehzahlbegrenzungsvorrichtung (n_i < n_max!) zur Begrenzung des Drehzahlsignals (n_i) auf einen Drehzahlsignal-Grenzwert (n_max) aufweist, welcher Drehzahlsignal-Grenzwert (n_max) einer vorgegebenen maximalen Drehzahl entspricht,
wobei der erste Regler (n_RGL), der zweite Regler (P_RGL) und die Drehzahlbegrenzungsvorrichtung den mindestens einen Stellwert (SW) an den Antriebsmotor ausgeben und derart zusammen wirken,
dass im Betrieb die vorgegebene maximale Drehzahl nicht überschritten wird.

9. Lüfter nach einem der vorhergehenden Ansprüche,
welcher eine Vorrichtung zur Erzeugung eines Temperatursignals (T_i) aufweist, welches eine Motortemperatur charakterisiert,
und bei welchem der Leistungssignal-Sollwert (P_s) für den Leistungsregler (36) in Abhängigkeit vom Temperatursignal (T_i) verändert wird, um eine Überlastung des Antriebsmotors (16) oder seiner Elektronik zu vermeiden.

10. Lüfter nach Anspruch 9, bei welchem der Leistungssignal-Sollwert (P_s) verringert wird, wenn das Temperatursignal (T_i) einer Temperatur entspricht, die mindestens so groß wie ein vorgegebener maximaler Temperaturwert (T_max) ist.

**Claims**

1. Fan, which exhibits:

a drive motor with a fan rotor;
an apparatus for generating a rotational-speed signal (n_i) that characterises the rotational speed of the fan rotor,
an apparatus for generating a power signal (P_i) that characterises the power consumed by the drive motor;
a first regulator (n_RGL) for regulating the rotational-speed signal (n_i) to a predetermined rotational-speed set value (n_s);
a second regulator (P_RGL) for regulating the power signal (P_i) to a predetermined power-signal set value (P_s) which corresponds to a predetermined minimum power consumption (P_min),
wherein the first regulator (n_RGL) and the second regulator (P_RGL) output at least one actuating value (SW) to the drive motor and interact in such a manner that during operation the at least one actuating value (SW)

      - in a first state has been determined by the first regulator (n_RGL), and
      - in a second state has been determined by the second regulator (P_RGL),

wherein a first change-over, from the first state to the second state, occurs when a first condition having at least one first criterion obtains,
wherein the first condition has the criterion that the power signal (P_i) corresponds to a consumed power that is less than said minimum power consumption (P_min), in order to influence the power signal (P_i) in such a way that it corresponds to a consumed power that is equal to or greater than the minimum power consumption (P_min).

2. Fan according to Claim 1,
in which the first condition additionally has the criterion that the rotational-speed signal (n_i) is at least as great as a predetermined rotational speed, the predetermined rotational speed preferably corresponding to the rotational-speed set value (n_s).

3. Fan according to Claim 1 or 2, in which the first regulator (n_RGL) and the second regulator (P_RGL) interact in such a manner that after a first change-over the second state is maintained at least for a time, even when the instantaneous rotational speed is less than the rotational speed predetermined by the first regulator (n_RGL).

4. Fan according to Claim 1 or 2, in which the first regulator (n_RGL) and the second regulator (P_RGL) interact in such a manner that a second change-over, from the second state to the first state, occurs when a second condition having at least one second criterion obtains.

5. Fan according to Claim 4, in which the second condition has the criterion that the rotational-speed signal (n_i) is less than the rotational-speed set value (n_s).

6. Fan according to Claim 5, in which the second condition additionally has the criterion that the power signal (P_i) corresponds to a consumed power that is at least as great as the minimum power consumption (P_min).

7. Fan according to one of the preceding claims, in which the volume-flow/power characteristic curve of the fan exhibits a saddle region (76), and in which the predetermined minimum power consumption (P_min) has been chosen in such a manner that the actuating value (SW) in the saddle region has been determined at least partly by the second regulator (P_RGL), and outside the saddle region at least partly by the first regulator (n_RGL).

8. Fan according to one of the preceding claims, which exhibits a rotational-speed-limiting apparatus ($n\_i \leq n\_max$) for limiting the rotational-speed signal (n_i) to a rotational-speed-signal limiting value (n_max), said rotational-speed-signal limiting value (n_max) corresponding to a predetermined maximum rotational speed,
wherein the first regulator (n_RGL), the second regulator (P_RGL) and the rotational-speed-limiting apparatus output the at least one actuating value (SW) to the drive motor and interact in such a manner that during operation the predetermined maximum rotational speed is not exceeded.

9. Fan according to one of the preceding claims,
which exhibits an apparatus for generating a temperature signal (T_i) that characterises a motor temperature,
and in which the power-signal set value (P_s) for the power regulator (36) is changed as a function of the temperature signal (T_i) in order to avoid an overloading of the drive motor (16) or its electronics.

10. Fan according to Claim 9, in which the power-signal set value (P_s) is decreased when the temperature signal (T_i) corresponds to a temperature that is at least as great as a predetermined maximum temperature value (T_max).

**Revendications**

1. Ventilateur, lequel présente :

   un moteur d'entraînement avec un rotor de ventilateur;
   un dispositif pour générer un signal de vitesse de rotation (n_i) qui caractérise la vitesse de rotation du rotor de ventilateur ;
   un dispositif pour générer un signal de puissance (P_i) qui caractérise la puissance absorbée par le moteur d'entraînement ;
   un premier régulateur (n_RGL) pour réguler le signal de vitesse de rotation (n_i) à une valeur de consigne de vitesse de rotation (n_s) prédéfinie ;
   un deuxième régulateur (P_RGL) pour réguler le signal de puissance (P_i) à une valeur de consigne de signal de puissance (P_s) prédéfinie qui correspond à une puissance absorbée minimale (P_min) prédéfinie,
   le premier régulateur (n_RGL) et le deuxième régulateur (P_RGL) délivrant au moins une valeur de réglage (SW) au moteur d'entraînement et coopérant de façon qu'en fonctionnement ladite au moins une valeur de réglage (SW)

   - soit déterminée dans un premier état par le premier régulateur (n_RGL), et
   - soit déterminée dans un deuxième état par le deuxième régulateur (n_RGL), un premier passage du premier état dans le deuxième état se produisant en présence d'une première condition avec au moins un premier critère, la première condition présentant le critère que le signal de puissance (P_i) correspond à une puissance absorbée qui est inférieure à la puissance absorbée minimale (P_min), afin d'influencer le signal de puissance (P_i) de façon qu'il corresponde à une puissance absorbée qui soit égale ou supérieure à la puissance absorbée minimale (P_min).

2. Ventilateur selon la revendication 1,
   dans lequel la première condition présente le critère supplémentaire que le signal de vitesse de rotation (n_i) est au moins égal à une vitesse de rotation prédéfinie, la vitesse de rotation prédéfinie correspondant de préférence à la valeur de consigne de vitesse de rotation (n_s).

3. Ventilateur selon la revendication 1 ou 2, dans lequel le premier régulateur (n_RGL) et le deuxième régulateur (P_RGL) coopèrent de façon qu'après un premier changement, le deuxième état soit maintenu au moins temporairement même si la vitesse de rotation momentanée est inférieure à la vitesse de rotation prédéfinie par le premier régulateur (n_RGL).

4. Ventilateur selon la revendication 1 ou 2, dans lequel le premier régulateur (n_RGL) et le deuxième régulateur (P_RGL) coopèrent de façon qu'un deuxième passage du deuxième état au premier état se produise en présence d'une deuxième condition avec au moins un deuxième critère.

5. Ventilateur selon la revendication 4, dans lequel la deuxième condition présente le critère que le signal de vitesse de rotation (n_i) est inférieur à la valeur de consigne de vitesse de rotation (n_s).

6. Ventilateur selon la revendication 5, dans lequel la deuxième condition présente le critère supplémentaire que le signal de puissance (P_i) correspond à une puissance absorbée qui est au moins égale à la puissance absorbée minimale (P_min).

7. Ventilateur selon l'une des revendications précédentes, dans lequel la courbe caractéristique débit/puissance du ventilateur présente une zone concave (76) et dans lequel la puissance absorbée minimale (P_min) prédéfinie est choisie de façon que la valeur de réglage (SW) soit déterminée au moins partiellement par le deuxième régulateur (P_RGL) dans la zone concave et au moins partiellement par le premier régulateur (n_RGL) à l'extérieur de la zone concave.

8. Ventilateur selon l'une des revendications précédentes, lequel présente un dispositif de limitation de vitesse de rotation (n_i < n_max !) pour limiter le signal de vitesse de rotation (n_i) à une valeur limite de signal de vitesse de rotation (n_max), laquelle valeur limite de signal de vitesse de rotation (n_max) correspond à une vitesse de rotation maximale prédéfinie,
   le premier régulateur (n_RGL), le deuxième régulateur (P_RGL) et le dispositif de limitation de vitesse de rotation délivrant ladite au moins une valeur de réglage (SW) au moteur d'entraînement et coopérant de façon qu'en fonctionnement, la vitesse de rotation maximale prédéfinie ne soit pas dépassée.

9. Ventilateur selon l'une des revendications précédentes,
lequel présente un dispositif pour générer un signal de température (T_i) qui caractérise une température du moteur, et dans lequel la valeur de consigne de signal de puissance (P_s) pour le régulateur de puissance (36) est modifiée en fonction du signal de température (T_i) pour éviter une surcharge du moteur d'entraînement (16) ou de son électronique.

10. Ventilateur selon la revendication 9, dans lequel la valeur de consigne de signal de puissance (P_s) est diminuée lorsque le signal de température (T_i) correspond à une température qui est au moins égale à une valeur de température maximale (T_max) prédéfinie.

20

18

16

22

NTC-
Temperatur
Sensor

22

Luftrichtung

18

22

16

21

14

12

10

14

Fig. 1

Fig. 2

Fig. 3

Fig.4

Fig.5

Fig.6

S291

I2-Interrupt

S292

COMMUT

S293

I1-Interrupt

S294

I_LIMIT

S280

INIT

S282

RGL

S284

IO

S286

OTHER

Fig.7

Fig. 8

S318'

P_RGL(P_s, P_i, n_max)

S330

e := P_s - P_i
esum := esum + e
SW := Kp * e
 + Ki * Ta * esum
 + Kd * (e - ealt)/Ta
ealt := e

S332

OUTPUT SW

S334

GET n_i

S336

S338

n_i > n_max?  —Y→  SW := SW - 1

N

RETURN    S340

Fig. 9

Fig. 10

EP 2 739 859 B1

Fig. 11

23

Fig. 12

Fig. 13

**IN DER BESCHREIBUNG AUFGEFÜHRTE DOKUMENTE**

**In der Beschreibung aufgeführte Patentdokumente**

- EP 1519113 A2
- DE 102008057870 A1
- WO 0028646 A2
- WO 0219510 A1
- WO 2006089605 A